**Europäisches Patentamt**

**European Patent Office**

**Office européen des brevets**

(19)

(11) Veröffentlichungsnummer: **0 175 381**
**A1**

(12) # EUROPÄISCHE PATENTANMELDUNG

(21) Anmeldenummer: **85111933.9**

(22) Anmeldetag: **20.09.85**

(51) Int. Cl.⁴: **G 03 B 15/08**
// G03B13/06

(30) Priorität: **21.09.84 DE 3434634**

(43) Veröffentlichungstag der Anmeldung: **26.03.86**
**Patentblatt 86/13**

(84) Benannte Vertragsstaaten: **AT BE CH DE FR GB IT LI LU NL SE**

(71) Anmelder: **HappyCard International Limited, GPA-House Airport Free Zone, Shannon County Clare (IE)**

(72) Erfinder: **Ostermeier, Heinrich, Ing. (grad.), Tagetesweg 31, D-5000 Köln 90 (DE)**

(74) Vertreter: **Moser, Herbert, Dr.-Ing., Nowackanlage 15, D-7500 Karlsruhe (DE)**

(54) **Aufnahmekamera zur Herstellung eines Bildträgers.**

(57) Eine Aufnahmekamera zur Herstellung eines Bildträgers, bei der zusammen mit einem von einem Gegenstand herrührenden aktuellen Bild Motivvorlagen durch Projektionssysteme in der Aufnahmeebene des Gehäuses abgebildet werden, soll hinsichtlich der Ausleuchtung der Motivvorlagen und der Schaffung einer handlichen Kompaktausführung des Gehäuses verbessert werden. Dies erfolgt dadurch, dass in einem Gehäuseteil (2), welcher die Blitzröhre (6) enthält, eine Mattscheibe (9) zur Beleuchtung mehrerer Motivvorlagen angeordnet ist, und dass die nachgeschalteten Projektionssysteme (17, 18, 19, 20) unterschiedliche Blendendurchmesser (21, 22, 21a, 22a) in Abhängigkeit vom Abstand des betreffenden Mattscheibenteils gegenüber der Blitzröhre (6) derart aufweisen, dass die unterschiedlichen Lichtintensitäten der zur Beleuchtung der Motivvorlagen festgelegten Bereiche ausgeglichen werden.

0175381

EU 945

**Dr.-Ing. Herbert Moser**
**Patentanwalt**
**75 Karlsruhe, Nowaokanlage 15**

Anmelder: HAPPYCARD INTERNATIONAL LIMITED
Shannon / IE

## Aufnahmekamera zur Herstellung eines Bildträgers

Die Erfindung betrifft eine Aufnahmekamera zur Herstellung eines Bildträgers, bei der zusammen mit einem von einem Gegenstand herrührenden, aktuellen Bild Motivvorlagen durch Projektionssysteme in der Aufnahmeebene des Gehäuses abgebildet werden, wobei die Belichtung der Motivvorlagen durch eine im Gehäuse angeordnete Blitzröhre erfolgt.

Eine derartige Aufnahmekamera ist in der DE 31 27 291 C1 beschrieben. Dabei sind in dem Ge-

0175381

häuse der Aufnahmekamera mehrere auf verschiedene
Bereiche des Bildträgers abgerichtete, getrennte
Lichtführungen vorgesehen, welche für die Wiedergabe von Dia-Motivvorlagen entsprechende Dia-Motivträger und Projektionsvorrichtungen sowie für
die Wiedergabe des aktuellen Bildes eine direkte
Aufnahmevorrichtung enthalten. Als Lichtquelle für
die Projektionsvorrichtungen der Motivträger kann
eine lichtabstrahlende Fläche vorgesehen sein.

Zum Stande der Technik gehört ferner eine Aufnahmekamera nach der DE-OS 25 54 048, durch die das Lichtbild einer Person mit entsprechenden personenbezogenen Daten auf einem Bildträger aufgezeichnet wird.
Zur Belichtung des durch ein optisches System in
die Aufnahmeebene abgebildeten Datenträgers ist eine
Blitzröhre vorgesehen.

Die Erfindung geht von der Aufgabenstellung aus, eine Aufnahmekamera der eingangs genannten Art so auszubilden, daß mit einer einzigen Blitzröhre mehrere
Projektionssysteme für Motivvorlagen einwandfrei ausgeleuchtet werden können. Außerdem wird trotz der vorhandenen Mehrzahl der optischen Projektionssysteme ein
einfacher und gebrauchstechnisch vorteilhafter Gesamtaufbau der Aufnahmekamera angestrebt.

Zur Lösung dieser Aufgabenstellung ist vorgesehen,
daß in einem Gehäuseteil, welcher die Blitzröhre
enthält, eine Mattscheibe zur Beleuchtung mehrerer Motivvorlagen angeordnet ist und daß die nachgeschalteten Projektionssysteme unterschiedliche Blendendurchmesser in Abhängigkeit vom Abstand des betreffenden Mattscheibenanteils gegenüber der Blitzröhre derart aufweisen, daß die unterschiedlichen
Lichtintensitäten der zur Beleuchtung der Motivvorlagen festgelegten Bereiche ausgeglichen werden.
Hierdurch läßt sich unter Verwendung einer einzigen
Blitzröhre, beispielsweise eines Elektronenblitzes,
eine einwandfrei angepaßte Beleuchtung verschiedener
Motivvorlagen erzielen.

Die Mattscheibe läßt sich u.U. durch ein anderes bekanntes Lichtverteilungselement, z.B. durch eine
Strichscheibe, ersetzen. Das Grundprinzip der Erfindung kann bevorzugt bei Dia-Motivvorlagen, aber auch
bei nichttransparenten Motivvorlagen angewendet werden.

Es kann ferner zweckmäßig sein, daß die Blitzröhre
gegenüber der Mattscheibe durch ein Abdeckelement derart abgedeckt ist, daß die Beleuchtung der Mattscheibe ausschließlich durch indirektes, reflektiertes
Licht erfolgt. Diese Maßnahme wirkt ebenfalls in Hinblick auf eine gleichmäßige Ausleuchtung der verschiedenen Bereiche der Mattscheibe.

Das Abdeckelement wird vorteilhaft zungenförmig gestaltet und auf der Seite der Blitzröhre als Reflektor, beispielsweise aus poliertem Metall, ausgebil-

4

0175381

det. Dadurch ergibt sich eine günstige Ausnutzung der Lichtmenge der Blitzröhre zur Beleuchtung der Oberfläche der Mattscheibe. Zweckmäßig kann der die Blitzröhre enthaltende Gehäuseteil lichtstreuende Oberflächen bzw. einen entsprechenden Einsatzteil aufweisen. Diese Oberflächen bestehen beispielsweise aus einer Auskleidung mit weißem Vlies, weißem Filz oder einem anderen an sich bekannten lichtstreuenden Material.

In weiterer Ausbildung der Erfindung kann es vorteilhaft sein, die Blitzröhre in dem Gehäuseteil unsymmetrisch, bevorzugt einseitig, anzuordnen.

Die Blitzröhre wird zweckmäßig in einem mit einer Mattscheibe abgedeckten Lampengehäuse untergebracht, welches mit einem optisch dichten Abdeckelement versehen ist. Der dem Lichtaustritt nach dem Gehäuse bestimmende Winkel zwischen Mattscheibe und ebenflächigen Abdeckelement ist vorteilhaft kleiner als $70^{\circ}$ und beträgt insbesondere $60^{\circ}$.

Zur Unterdrückung einer Überbelichtung im blitznahen Bereich erscheint es ferner günstig, mindestens eine Teilfläche der lichtstreuenden Oberflächen im Bereich der Blitzröhre geschwärzt und in ihrer Kontur derart auszubilden, daß eine Überbelichtung der blitznahen Bereiche zusätzlich vermieden wird.

Eine günstige konstruktive Ausführungsform der Aufnahmekamera kann dadurch erreicht werden, daß das
Gehäuse mit vertikalem Strahlengang der Projektionssysteme für die Dia-Motivvorlagen ausgebildet ist,
wobei sich unterhalb eines oberen Gehäuseteils mit
derBlitzröhre und Mattscheibe ein einschiebbarer
Diaträger zum Einsetzen mehrerer Dia-Motivvorlagen
befindet. Die Projektionslinsensysteme sind in einer darunterliegenden Trennwand angeordnet, und das
Objektiv zur Aufnahme des aktuellen Bildes liegt in
einem horizontalen Lichtschacht, dessen Strahlengang durch einen Umlenkspiegel in einen vertikalen
Lichtschacht umgelenkt wird, so daß das aktuelle
Bild in der Aufnahmeebene der projizierten Dia-Motivvorlagen entsteht. In einem unteren Gehäuseteil
befindet sich eine Aufnahmevorrichtung für das zu
belichtende Bildträgermaterial.

Eine solche Gestaltung ergibt eine Kompaktbauweise
und ermöglicht wegen der günstigen Schwerpunktanordnung eine optimale Kamerahaltung.

Die Aufnahmevorrichtung für das zu belichtende Bildträgermaterial kann zweckmäßig in bekannter Weise
als Filmaufwickelvorrichtung oder gegebenenfalls
günstiger in Form einer Mehrfachpackung des unbelichteten Bildträgermaterials ausgebildet sein.

Eine zweckmäßige Ausgestaltung läßt sich u.U. dadurch erzielen, daß in dem Gehäuse ein Sucher mit
Lichtführungsschacht derart angeordnet ist, daß
dieser Lichtführungsschacht im freien Zwischenraum

6                    0175381

zwischen den Strahlengängen der Projektionssysteme
liegt. Vorteilhaft kann der Sucher eine auswechselbare Blende, angepaßt an die Größe des vertikalen
Lichtschachtes im Strahlengang des aktuellen Bildes,
aufweisen.

Mit den Merkmalen der Erfindung ergibt sich eine
Aufnahmekamera zur Herstellung eines Bildträgers,
welche bei einfachem Gesamtaufbau eine günstige Handhabung ermöglicht und bei der eine einzige Blitzröhre zur einwandfreien Ausleuchtung mehrerer Dia-Motivvorlagen bei deren Projektion benutzt wird.

In der Zeichnung ist ein Ausführungsbeispiel des Gegenstandes der Erfindung schematisch dargestellt;
es zeigen:

    Fig. 1    einen Längsschnitt durch eine Aufnahmekamera,
    Fig. 2    einen Querschnitt längs der Linie 2-2

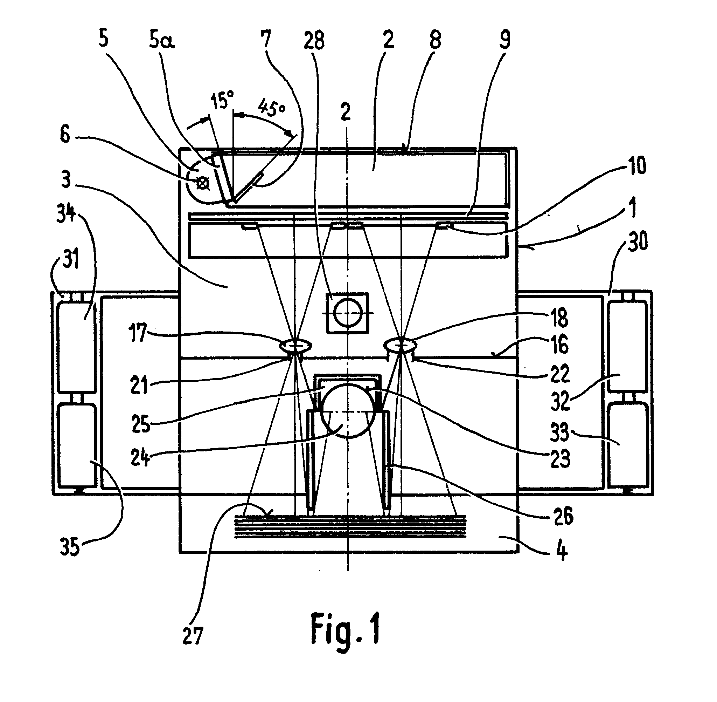

              in Fig. 1,

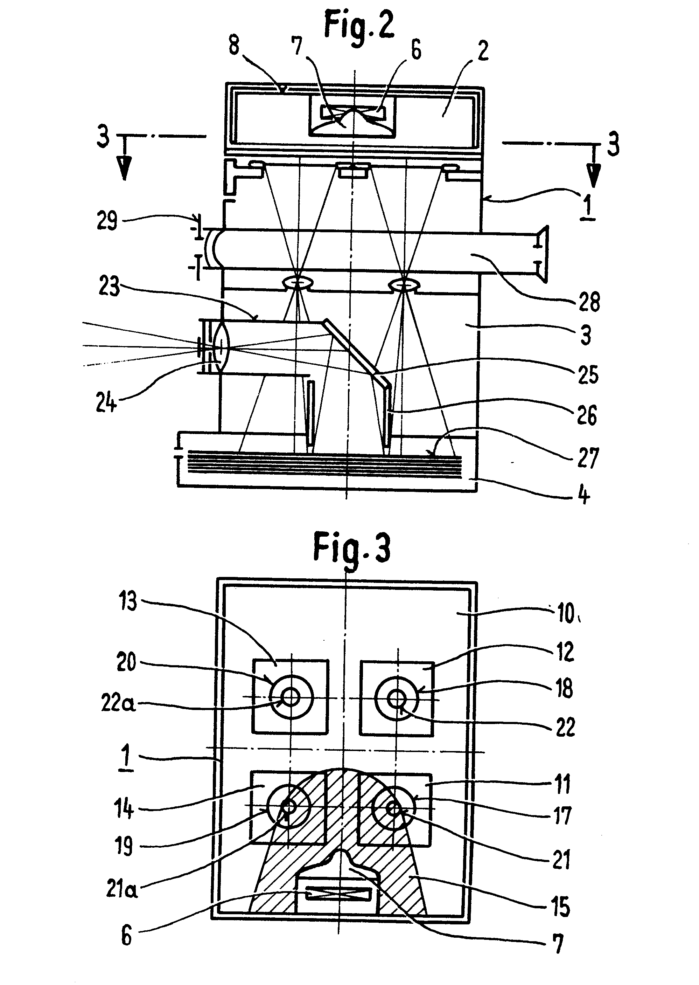

    Fig. 3    einen Schnitt längs der Linie 3-3 in
              Fig. 2 und eine Draufsicht auf den
              Dia-Träger.

In Fig. 1 und 2 ist ein Gehäuse 1 dargestellt, welches
aus einem oberen Gehäuseteil 2, einem mittleren Gehäuseteil 3 und einem unteren Gehäuseteil 4 besteht.

In dem oberen Gehäuseteil 2 ist in einem Lampengehäuse 5, das als Lichtaustritt eine Mattscheibe 5a aufweist, eine Blitzröhre 6 angeordnet. Vor dem Lichtaustritt befindet sich ein zungenförmiges Abdeckelement 7, welches als polierter Metallreflektor ausgebildet ist. Im oberen Gehäuseteil 2 ist außerdem zur
Lichtstreuung ein aus weißem Vlies bestehender Streueinsatz 8 angeordnet. Die Lichtaustrittsebene des
Lampengehäuses 5 ist gegenüber der Vertikalen um 15$^{\circ}$
geneigt, und das zungenförmige Abdeckelement 7 weist
gegenüber dieser Vertikalen eine Winkellage von 45$^{\circ}$
auf.

Unterhalb des oberen Gehäuseteils 2 liegt eine Mattscheibe 9, die sich oberhalb eines in einem Einsteckschlitz einschiebbaren Dia-Trägers 10 befindet. Der
Dia-Träger 10 ist, wie in Fig. 3 erkennbar, mit vier
Ausnehmungen 11,12,13 und 14 zum Einsetzen entsprechender Dia-Motivvorlagen versehen.

Sowohl die Mattscheibe 5a als auch die Mattscheibe 9
können vorteilhaft zur Anpassung der Farbtemperatur
der Blitzröhre 6 mit Farbfilterwirkung ausgerüstet
sein. Hierzu lassen sich insbesondere Strichscheiben
mit Farbfiltern verwenden.

In dem Bereich gegenüber dem Lichtaustritt der Blitzröhre 6 ist auf dem Streueinsatz 8 eine zungenförmige
Schwärzungszone 15 angeordnet, deren Kontur in Fig. 3
deutlich erkennbar ist.

In dem mittleren Gehäuseteil 3 befindet sich eine
Trennwand 16, in der vier als asphärische 2-Linser ausgebildete Projektionssysteme 17,18,19,20 angeordnet sind. Diese Trennwand 16 kann zum Wechsel der
Projektionssysteme gegebenenfalls austauschbar sein.

Die Projektionssysteme enthalten Blenden 21,22;21a,22a
von unterschiedlichem Durchmesser. Die kleineren Blendendurchmesser entsprechen den Teilbereichen der
Mattscheibe 9, welche der Blitzröhre am nächsten liegen.

Zur Aufnahme des aktuellen Bildes ist ein horizontaler
Lichtschacht 23 vorgesehen, in dem sich ein Objektiv 24
mit verstellbarer Blende und Verschlußeinrichtung befindet. Am hinteren Ende des horizontalen Lichtschachtes
23 liegt ein Umlenkspiegel 25 zur Umlenkung des Strahlenganges in einen vertikalen Lichtschacht 26, welcher
mit seinem unteren Rand zur scharfrandigen Abgrenzung
des aktuellen Bildes dient und verschiedene Querschnittsformen, beispielsweise rohrförmig, eckig, herzförmig,
elliptisch, rautenförmig und ähnlich aufweisen kann.
Dieser vertikale Lichtschacht 26 ist bis auf die Oberfläche des im unteren Gehäuseteils 4 angeordneten Bildträgers 27 herabgezogen und berührt den Bildträger oder
endet in geringem Abstand hiervon.

Der mittlere Gehäuseteil 3 enthält ferner einen Sucher
mit horizontalem Lichtführungsschacht 28, der im freien
Zwischenraum zwischen den Strahlengängen der Projektionssysteme angeordnet ist. Der Sucher ist mit einer
auswechselbaren Blende 29 zur Anpassung an verschiedene Querschnittsformen des rohrförmigen vertikalen Lichtschachtes 26 versehen. Die Querschnittsform des vertikalen Lichtschachtes bestimmt die Umrißform des aktuellen Bildes.

Im übrigen werden innerhalb des Gehäuses 1 keine besonderen getrennten Lichtführungen zwischen dem Dia-
Motivträger 10, den Projektionssystemen 17 bis 20 und
dem Bildträger 27 benötigt.

In den beiden Handgriffen 30,31 des Kameragehäuses 1
sind Batteriezellen 32,33,34,35 untergebracht.

Die außerdem vorhandenen Bauteile, insbesondere die
Verdrahtung der Blitzröhre 6, entsprechen bekannten
Ausführungen und sind daher in der schematischen Zeichnung weggelassen worden. Die zugehörigen Schaltelemente zur Auslösung des Blitzes werden gegebenenfalls
zweckmäßig mit der Auslösung des Verschlusses an dem
zur Aufnahme des aktuellen Bildes vorgesehenen Objektiv synchronisiert.

Eine derartige Aufnahmekamera eignet sich insbesondere zur Herstellung von Bildpostkarten. Dabei können
verschiedene statische Motivvorlagen, beispielsweise
charakteristische Landschaftsansichten, mit einem aktuellen, personenbezogenen Bildausschnitt kombiniert
werden.

EU 945

Patentansprüche

1. Aufnahmekamera zur Herstellung eines Bildträgers,
   bei der zusammen mit einem von einem Gegenstand
   herrührenden aktuellen Bild Motivvorlagen durch
   Projektionssysteme in der Aufnahmeebene des Gehäuses abgebildet werden, wobei die Belichtung
   der Motivvorlagen durch eine im Gehäuse angeordnete Blitzröhre erfolgt, d a d u r c h   g e -
   k e n n z e i c h n e t, daß in einem Gehäuseteil
   (2), welcher die Blitzröhre (6) enthält, eine
   Mattscheibe (9) zur Beleuchtung mehrerer Motivvorlagen angeordnet ist, und daß die nachgeschalteten Projektionssysteme (17,18,19,20) unterschiedliche Blendendurchmesser (21,22;21a,22a) in Abhängigkeit vom Abstand des betreffenden Mattscheiben  -
   teils gegenüber der Blitzröhre (6) derart aufweisen,
   daß die unterschiedlichen Lichtintensitäten der
   zur Beleuchtung der Motivvorlagen festgelegten
   Bereiche ausgeglichen werden.

2. Aufnahmekamera nach Anspruch 1, d a d u r c h
   g e k e n n z e i c h n e t, daß die Blitzröhre
   (6) gegenüber der Mattscheibe (9) durch ein Abdeckelement (7) derart abgedeckt ist, daß die Beleuchtung der Mattscheibe (9) ausschließlich durch
   indirektes, reflektiertes Licht erfolgt.

3. Aufnahmekamera nach Anspruch 2, d a d u r c h
   g e k e n n z e i c h n e t, daß die Blitzröhre
   (6) in einem Lampengehäuse (5) angeordnet ist,
   und daß die Lichtaustrittsfläche des Lampengehäuses (5) mit einer Mattscheibe (5a) abgedeckt ist.

4. Aufnahmekamera nach Anspruch 3, d a d u r c h
   g e k e n n z e i c h n e t, daß zusätzlich
   eine Strichscheibe mit Farbfilter vorgesehen ist.

5. Aufnahmekamera nach Anspruch 2, d a d u r c h
   g e k e n n z e i c h n e t, daß das Abdeckelement (7) zungenförmig gestaltet und auf der
   Seite der Blitzröhre (6) als Reflektor ausgebildet ist.

6. Aufnahmekamera nach Anspruch 1, d a d u r c h
   g e k e n n z e i c h n e t, daß der die Blitzröhre (6) enthaltende Gehäuseteil (2) lichtstreuende Oberflächen (8) aufweist.

7. Aufnahmekamera nach Anspruch 2, d a d u r c h
   g e k e n n z e i c h n e t, daß die Blitzröhre
   (6) in dem Gehäuseteil (2) unsymmetrisch, einseitig angeordnet ist.

8. Aufnahmekamera nach Anspruch 2, d a d u r c h
   g e k e n n z e i c h n e t, daß mindestens eine
   Teilfläche der lichtstreuenden Oberflächen im Bereich der Blitzröhre (6) geschwärzt und in ihrer

0175381

Kontur (15) derart ausgebildet ist, daß eine Überbelichtung der blitznahen Bereiche zusätzlich ausgeglichen wird.

9. Aufnahmekamera nach Anspruch 1, d a d u r c h
g e k e n n z e i c h n e t, daß das Gehäuse (1)
mit vertikalem Strahlengang der Projektionssysteme
(17,18,19,20) für die Dia-Motivvorlagen ausgebildet
ist, wobei sich unterhalb eines oberen Gehäuseteils
mit der Blitzröhre (6) und der Mattscheibe (9) ein
einschiebbarer Dia-Träger (10) zum Einsetzen mehrerer
Dia-Motivvorlagen befindet, daß die Projektionssysteme
als Linsensysteme (17,18,19,20) in einer darunterliegenden Trennwand (16) angeordnet sind, und daß das
Objektiv (24) zur Aufnahme des aktuellen Bildes in
einem horizontalen Lichtschacht (23) angeordnet ist,
dessen Strahlengang durch einen Umlenkspiegel (25)
in einen vertikalen Lichtschacht (26) umgelenkt wird,
so daß das aktuelle Bild in der Aufnahmeebene der
projizierten Dia-Motivvorlagen entsteht und daß sich
in einem unteren Gehäuseteil (4) eine Aufnahmevorrichtung für das zu belichtende Bildträgermaterial
(27) befindet.

10. Aufnahmekamera nach Anspruch 9, d a d u r c h
g e k e n n z e i c h n e t, daß in dem Gehäuse
(1) ein Sucher mit Lichtführungsschacht (28)
derart angeordnet ist, daß dieser Lichtführungsschacht (28) im freien Zwischenraum zwischen den
Strahlengängen der Projektionssysteme (17,18,19,20)
liegt.

13 0175381

11. Aufnahmekamera nach Anspruch 10, d a d u r c h
    g e k e n n z e i c h n e t, daß der Sucher eine
    auswechselbare Blende (29), angepaßt an den Querschnitt des vertikalen Lichtführungsschacht (26)
    im Strahlengang des aktuellen Bildes aufweist.

**Fig. 1**

## Fig.2

## Fig.3

Europäisches
Patentamt

**EUROPÄISCHER RECHERCHENBERICHT**

| | EINSCHLÄGIGE DOKUMENTE | | EP 85111933.9 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int Cl 4)** |
| Y | US - A - 3 888 572 (DEJOUX) <br> * Zusammenfassung; Fig. 1; Spalte 2, Zeile 50 * | 1 | G 03 B 15/08 <br> G 03 B 13/06 |
| A | * Fig. 1; Spalte 2, Zeile 50; Spalte 3, Zeilen 44-56 * | 3,7,9 | |
| | -- | | |
| | DE - A1 - 2 847 011 (PHILIPS) | | |
| Y | * Patentansprüche; Fig. 1,3; Seite 10, Zeile 34 - Seite 11, Zeile 4 * | 1 | |
| | -- | | |
| | DE - A1 - 2 554 048 (AGFA) | | |
| D,Y | * Fig. 1-3,6; Seite 7, Zeile 13; Seite 8 * | 1 | |
| A | * Fig. 1 * | 3,7,9 | |

**RECHERCHIERTE SACHGEBIETE (Int. Cl.4)**

| | | | |
|---|---|---|---|
| | US - A - 3 697 177 (BOOTH) | | G 03 B 9/00 |
| Y | * Fig. 1-4; Zusammenfassung; Spalte 2, Zeile 67; Spalte 3, Zeilen 10,41-49; Spalte 5, Zeilen 23-39 * | 1 | G 03 B 13/00 <br> G 03 B 15/00 |
| A | | 3,5,6,8 | G 03 B 17/00 <br> G 03 B 19/00 |
| | -- | | |
| | US - E - 30 258 (FUJITA) | | G 03 B 27/00 |
| A | * Zusammenfassung; Fig. 1-5; Spalte 4, Zeilen 25-51 * | 1,8,10 | |
| | -- | | |
| | US - A - 3 693 514 (KOIZUMI) | | |
| A | * Fig. 1; Spalte 2, Zeilen 50-54 * | 1-3,5,6 | |
| | ---- | | |

Der vorliegende Recherchenbericht wurde für alle Patentansprüche erstellt.

| **Recherchenort** | **Abschlußdatum der Recherche** | **Prüfer** |
|---|---|---|
| WIEN | 29-11-1985 | KRAL |